# EUROPEAN PATENT APPLICATION

(11) **EP 4 546 798 A1**
(43) Date of publication of application: **30.04.2025**
(21) Application number: 24180557.1
(22) Date of filing: 06.06.2024
(51) Int. Cl.: H04N 21/41, H04N 21/414, H04N 21/43, H04N 21/442

(54) **STREAMING MEDIA PLAYING METHOD, STREAMING MEDIA PLAYING DEVICE, AND STORAGE MEDIUM**

(30) Priority: 25.10.2023 CN 202311398176
(71) Applicant: Beijing Xiaomi Mobile Software Co., Ltd., Beijing 100085 (CN)
(72) Inventor: QIU, Shiding, Beijing, 100085 (CN); LIU, Qing, Beijing, 100085 (CN); WANG, Kaidi, Beijing, 100085 (CN)
(74) Representative: Stöckeler, Ferdinand

(57) **Abstract**

A streaming media playing method, a streaming media playing device, and a storage medium are provided. The streaming media playing method includes: detecting (S11) a second media playing device meeting a first condition, in response to that a first media playing device is playing streaming media content; and transferring (S12) the streaming media content to the second media playing device for playing, in response to that the second media playing device meeting the first condition is detected.

## Description

### FIELD

The present invention relates to the field of computer software technologies, and more particularly to a streaming media playing method, a streaming media playing device, and a storage medium.

### BACKGROUND

In today's era, streaming media services are widely used on many different devices, and cross-device streaming media playing has become a major trend.

In the related art, traditional cross-device streaming media playing technologies, such as Digital Living Network Alliance (DLNA), Wireless Display Standard (Miracast), Bluetooth audio playing, etc., mainly focus on the coupling and transmission at the device level. However, these technologies only support manual operations by users, and cannot fully meet the personalized needs of the users.

### SUMMARY

In order to overcome the problems existing in the related art, the present invention provides a streaming media playing method, a streaming media playing device, and a storage medium.

Embodiments of a first aspect of the present invention provide a streaming media playing method, and the method includes: detecting a second media playing device meeting a first condition, in response to that a first media playing device is playing streaming media content; and transferring the streaming media content to the second media playing device for playing, in response to that the second media playing device meeting the first condition is detected.

Optionally, before transferring the streaming media content to the second media playing device for playing, the method further includes: determining that a second condition is met based on at least one of a device state, a spatial position relationship, and a historical behavior. The device state refers to a playing state of the second media playing device. The spatial position relationship refers to a spatial position relationship between the first media playing device and the second media playing device. The historical behavior is configured to indicate a behavior of whether a user transfers a media file played by the first media playing device.

Optionally, it is determined that the second condition is met, in response to meeting at least one of: a current playing state of the second media playing device being an idle state; the first media playing device and the second media playing device being within a same spatial range; and there being a behavior of the user transferring the media file played by the first media playing device in the historical behavior.

Optionally, meeting the first condition includes at least one of: using a same account and/or a same network as the first media playing device for data transmission; supporting adopting a secure transmission protocol with a security level higher than a level threshold to perform data transmission; and not playing a media file.

Optionally, before transferring the streaming media content to the second media playing device for playing, the method further includes: displaying prompt information and determining that an instruction of a user confirming to transfer the streaming media content to the second media playing device for playing is received. The prompt information is configured to prompt the user whether to transfer the streaming media content to the second media playing device for playing.

Optionally, the method further includes: saving a historical behavior of the user deciding whether to transfer the streaming media content to the second media playing device for playing based on the prompt information.

Embodiments of a second aspect of the present invention provide a streaming media playing device, and the device includes: a detection unit configured to detect a second media playing device meeting a first condition, in response to that a first media playing device is playing streaming media content; and a processing unit configured to transfer the streaming media content to the second media playing device for playing, in response to that the second media playing device meeting the first condition is detected.

Optionally, before transferring the streaming media content to the second media playing device for playing, the processing unit is further configured to determine that a second condition is met based on at least one of a device state, a spatial position relationship, and a historical behavior. The device state refers to a playing state of the second media playing device. The spatial position relationship refers to a spatial position relationship between the first media playing device and the second media playing device. The historical behavior is configured to indicate a behavior of whether the user transfers a media file played by the first media playing device.

Optionally, the processing unit determines that the second condition is met, in response to that at least one of the following is met: a current playing state of the second media playing device being an idle state; the first media playing device and the second media playing device being within a same spatial range; and there being a behavior of the user transferring the media file played by the first media playing device in the historical behavior.

Optionally, meeting the first condition includes at least one of: using a same account and/or a same network as the first media playing device for data transmission; supporting adopting a secure transmission protocol with a security level higher than a level threshold to perform data transmission; and not playing the media file.

Optionally, the processing unit is further configured to: display prompt information and determine that an instruction of a user confirming to transfer the streaming media content to the second media playing device for playing is received, before the processing unit transfers the streaming media content to the second media playing device for playing. The prompt information is configured to prompt the user whether to transfer the streaming media content to the second media playing device for playing.

Optionally, the processing unit is further configured to: save a historical behavior of the user deciding whether to transfer the streaming media content to the second media playing device for playing based on the prompt information.

Embodiments of a third aspect of the present invention provide a streaming media playing device, including: a processor; and a memory for storing instructions executable by the processor. The processor is configured to execute the streaming media playing method according to the first aspect or any one of the embodiments of the first aspect.

Embodiments of a fourth aspect of the present invention provide a storage medium, an instruction is stored in the storage medium, and when the instruction in the storage medium is executed by a processor, the processor is allowed to execute the streaming media playing method according to the first aspect or any one of the embodiments of the first aspect.

The technical solutions provided in the embodiments of the present invention may have the following beneficial effects. In response to that the first media playing device is playing the streaming media content, the second media playing device meeting the transfer condition is detected, and the streaming media content is transferred from the first media playing device to the second media playing device to continue being playing. Through the present invention, the user experience is improved and the intelligent development is realized.

It should be understood that both the forgoing general descriptions and the following detailed descriptions are illustrative and explanatory only, and are not restrictive of the present invention.

### BRIEF DESCRIPTION OF THE DRAWINGS

The drawings herein are incorporated into the specification and form a part of the specification, show embodiments that comply with the present invention, and are used to explain the principles of the present invention together with the specification.
Fig. 1 shows a flow chart of a streaming media playing method according to an illustrative embodiment.
Fig. 2 shows a flow chart of transfer based on a second condition according to an illustrative embodiment.
Fig. 3 shows a flow chart of a method for confirming a second condition according to an illustrative embodiment.
Fig. 4 shows a flow chart of a method for confirming streaming media playing according to an illustrative embodiment.
Fig. 5 shows a flow chart of a streaming media playing method according to an illustrative embodiment.
Fig. 6 shows a block diagram of a streaming media playing device according to an illustrative embodiment.
Fig. 7 shows a block diagram of a device for streaming media playing according to an illustrative embodiment.
Fig. 8 shows a block diagram of a device for streaming media playing according to an illustrative embodiment.

### DETAILED DESCRIPTION

Illustrative embodiments are described in detail here, and examples are shown in the accompanying drawings. When the following description refers to the accompanying drawings, unless specified or limited otherwise, the same number in different accompanying drawings indicates the same or similar elements. The embodiments described in the following illustrative examples are not representative of all possible embodiments consistent with the present invention.

In traditional cross-device streaming media playing technologies, when playing audio and video contents, if it is detected that they are transferred to a second device from a first device, users need to manually perform the flow operation, which cannot achieve personalized recommendations and highly relies on manual selections, thus limiting the user experience and the intelligent development.

Therefore, the present invention proposes a streaming media playing method.

Embodiments of the present invention illustrate the steps of the streaming media playing method.

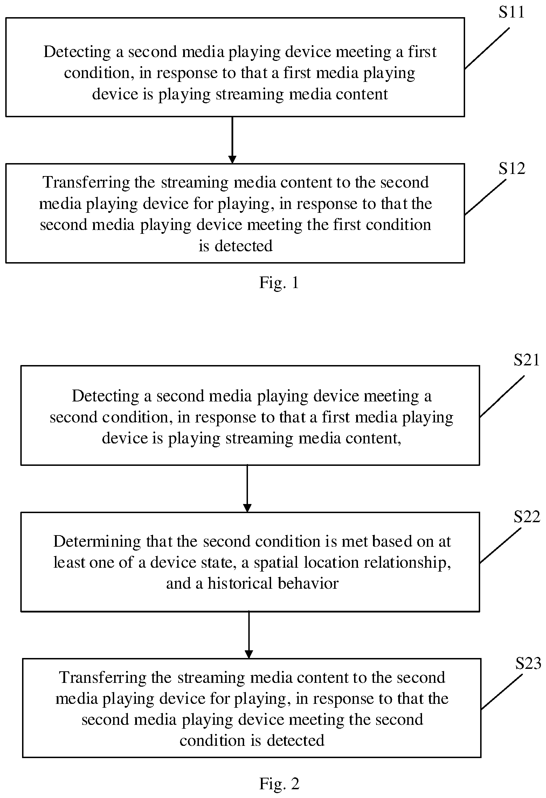

Fig. 1 shows a flow chart of a streaming media playing method according to an illustrative embodiment. As illustrated in Fig. 1, the method includes step S11 to step S12.

In step S11, in response to that a first media playing device is playing streaming media content, a second media playing device meeting a first condition is detected.

In the embodiments of the present invention, the first media playing device may be a terminal that is playing the streaming media content. The streaming media content may be understood as audio and video. Audio and video applications are connected to an interface of the first media playing device or register a streaming media player, so that any playing behavior of the audio and video content may be recognized by the first media playing device. Based on this, the first media playing device can determine the audio and video content that is being played, i.e., the streaming media content.

In step S12, in response to that the second media playing device meeting the first condition is detected, the streaming media content is transferred to the second media playing device for playing.

In the embodiments of the present invention, in response to that the second media playing device is detected, the audio and video content is transferred to the second media playing device. The second media playing device is an intelligent terminal, which may be a terminal, a tablet, a laptop, a speaker, a TV, etc. Transfer may be understood as audio and video projection.

In the embodiments of the present invention, in response to that the condition is met, the streaming media content is transferred from the first media playing device to the second media playing device, and thus the intelligent transfer of the streaming media can be realized.

Embodiments of the present invention illustrate a second condition to be met before the streaming media content is transferred below.

Fig. 2 shows a flow chart of transfer based on a second condition according to an illustrative embodiment. As illustrated in Fig. 2, the method includes step S21 to step S23.

In step S21, in response to that a first media playing device is playing streaming media content, a second media playing device meeting the second condition is detected.

In embodiments of the present invention, the first media playing device is playing the streaming media content, and after it is detected the second condition is met, the streaming media content is transferred to the second media playing device for playing.

In step S22, it is determined that the second condition is met based on at least one of a device state, a spatial position relationship, and a historical behavior.

In embodiments of the present invention, the second condition for determining that the transfer of audio and video playing is met includes at least one of the device state, the spatial position relationship, and the historical behavior. The device state is a playing state of the second media playing device, which may include an idle state and other states. The spatial position relationship may be understood as a spatial position relationship where the first media playing device and the second media playing device may be successfully connected.

In step S23, in response to that the second media playing device meeting the second condition is detected, the streaming media content is transferred to the second media playing device for playing.

In embodiments of the present invention, it is determined that the second condition is met based on at least one of the device state, the spatial position relationship, and the historical behavior, and the streaming media content is transferred from the first media playing device to the second media playing device.

In embodiments of the present invention, by determining that at least one of the conditions of streaming media transfer is met, the streaming media content is transferred from the first media playing device to the second media playing device, thus reducing the number of manual operations by the users and optimizing the user experience.

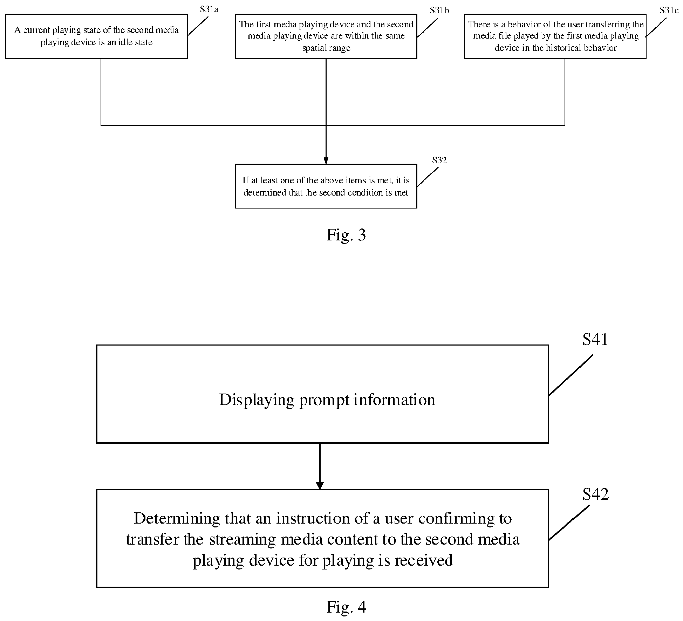

Embodiments of the present invention illustrate the second condition below. Fig. 3 shows a flow chart of a method for confirming the second condition according to an illustrative embodiment. As shown in Fig. 3, the method includes the following steps.

In step S31a, a current playing state of the second media playing device is the idle state. In step S31b, the first media playing device and the second media playing device are located in the same spatial range. In step S31c, a behavior, that the user transfers a media file played by the first media playing device, exists in the historical behavior.

In embodiments of the present invention, the user can control the first media playing device to search for the second media playing device through a local area network or Bluetooth. The local area network means that the first media playing device and the second media playing device are connected to the same local area network through the same router. Bluetooth means that the first media playing device is connected to the second media playing device based on Received Signal Strength Indicator (RSSI). After the second media playing device that can be connected is detected, it is confirmed that the second media playing device is in the idle state. The idle state may be understood as a state where the second media playing device is not playing and not being projected to when it is in a power-on state. If the second media playing device is shut down or powered off, it is not considered as a transfer object by the system.

In an example, there are a plurality of situations when the streaming media content is transferred from the first media playing device to the second media playing device. For example, if there are a plurality of second media playing devices, the first media playing device may consider the properties of the second media playing devices first. For example, if playing content to be transferred by the first media playing device is video content, the second media playing device that can be selected includes the TV and the tablet at this time. As the TV has a better viewing experience than the tablet, the TV preferentially serves as the second media playing device for transfer. If the playing content to be transferred by the first media playing device is video, and only a speaker is detected to be in the idle state, the system does not consider the second media playing device (i.e. the speaker) at this time as the transfer object because the speaker cannot play the video content.

In embodiments of the present invention, the first media playing device and the second media playing device are within the same spatial range. If the first media playing device and the second media playing device are in the same local area network or within the wireless signal strength, they may be considered to be within the same spatial range, and the second media playing device within this range is considered as the transfer object.

In embodiments of the present invention, the historical behavior may include the second media playing device selected last time or the number of times of the user selecting a certain second media playing device when the user transfers the media file played by the first media playing device to the second media playing device.

In an example, if there are a plurality of second media playing devices available for transfer within the same spatial range, the second media playing device for transfer by the user last time may be considered as the transfer object for transfer. Or, the number of times that the plurality of second media playing devices have been transferred to may be compared, and the second media playing device with the largest number of times of transfer may serve as the transfer object for transfer.

In step S32, in case that at least one of the above items is met, it is determined that the second condition is met.

In embodiments of the present invention, the second media playing device to be transferred to may be determined based on at least one of a plurality of conditions, thus solving the problem of supporting manual operations and improving the user experience.

Embodiments of the present invention illustrate the first condition below.

In embodiments of the present invention, in response to that the first media playing device is playing the streaming media content, the second media playing device meeting the first condition is detected to transfer the streaming media content. The first condition may include at least one of: using the same account and/or the same network as the first media playing device for data transmission, supporting adopting a secure transmission protocol with a security level higher than a level threshold to perform data transmission, or not playing the media file.

In embodiments of the present invention, the first media playing device may obtain the account information of the second media playing device and compare it with its own account information to verify whether they are the same account. If they are the same account, a trust relationship may be automatically established between the first media playing device and the second media playing device without user intervention. If the first media playing device and the second media playing device are under different accounts in the same network, the second media playing device may display the verification code information, and the relevant verification code information may be input into the first media playing device, so that the establishment of the mutual trust relationship can be completed, thus realizing the data transmission.

In embodiments of the present invention, it is supported that the secure transmission protocol with the security level higher than the level threshold is adopted to complete the data transmission, thus realizing a real-time and secure data exchange.

In embodiments of the present invention, when it is detected that the second media playing device does not play other media files, that is, it is in the idle state, it is confirmed that the second media playing device is considered as the transfer object.

In embodiments of the present invention, based on the establishment of the mutual trust relationship between the first media playing device and the second media playing device and the secure transmission protocol, the efficient data transmission between the devices is realized, laying a foundation for subsequent intelligent recommendations and personalized services.

Embodiments of the present invention illustrate a method before the streaming media content is transferred to the second media playing device for playing below.

Fig. 4 shows a flow chart of a method of confirming playing of the streaming media according to an illustrative embodiment. As illustrated in Fig. 4, the method includes step S41 to step S42.

In step S41, prompt information is displayed.

In embodiments of the present invention, when the determination is completed based on the first condition and the second condition, and the second media playing device is confirmed for transfer, the prompt information will be displayed on the first media playing device, and the prompt information is configured to prompt the user whether to transfer the streaming media content to the second media playing device for playing.

In step S42, it is determined that an instruction of the user confirming to transfer the streaming media content to the second media playing device for playing is received.

In embodiments of the present invention, if the second media playing device is confirmed to be the transfer object, the instruction of the user confirming to transfer the streaming media content to the second media playing device for playing is received.

In embodiments of the present invention, when the user is asked whether to carry out the transfer, one manual operation is performed, which solves the remaining manual operation steps, thus meeting the personalized needs of the user, and improving the user experience.

Embodiments of the present invention illustrate the user's transfer behavior below.

In embodiments of the present invention, the historical behavior of the user deciding whether to transfer the streaming media content to the second media playing device for playing based on the prompt information is saved. After the prompt information is displayed on the first media playing device, if the user chooses to transfer, the second media playing device receives the instruction to perform playing, and the streaming media content is transferred from the first media playing device to the second media playing device to continue being played.

If the user chooses not to transfer, the second media playing device will not play any streaming media content, the historical behavior of the user deciding whether to transfer the streaming media content to the second media playing device for playing based on the prompt information is saved, and this user behavior may be used for the next system decision.

In embodiments of the present invention, by saving the user's historical behavior, the user experience is improved and the intelligent development is realized.

Embodiments of the present invention illustrate the streaming media playing method below.

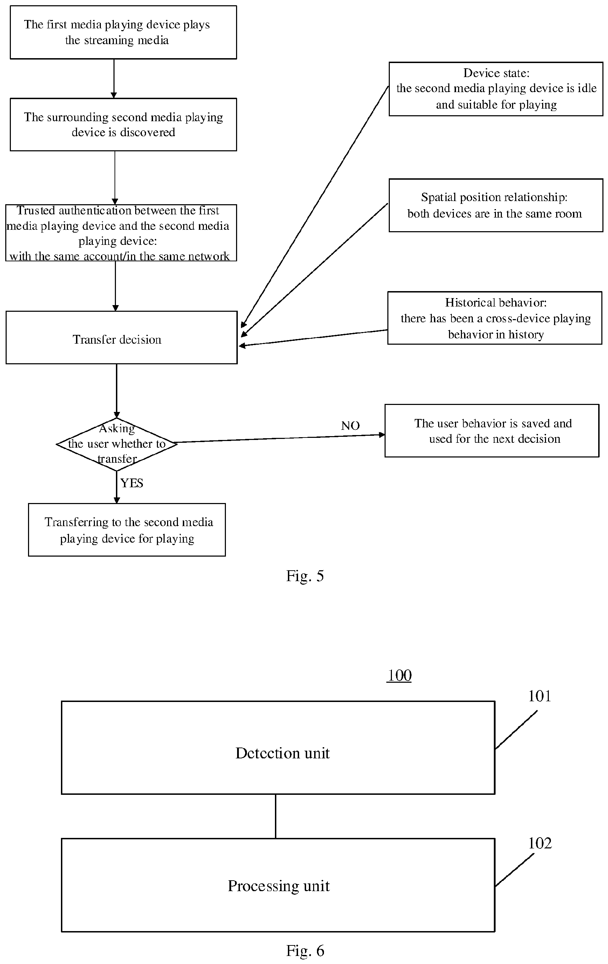

Fig. 5 shows a flow chart of a streaming media playing method according to an illustrative embodiment. As shown in Fig. 5, the method includes the following steps.

In embodiments of the present invention, the first media playing device is playing the streaming media, which may be audio or video, and a surrounding second media playing device is discovered based on being in the same local area network or connected to the same Bluetooth. If the first media playing device and the second media playing device use the same account, the mutual trust relationship may be directly established for data transmission. If the first media playing device and the second media playing device are devices of different accounts in the same network, the system needs to establish the mutual trust relationship through the user. Based on this, the device state, the spatial position relationship, and the historical behavior of the first media playing device and the second media playing device are judged to determine whether the streaming media content may be transferred to the second media playing device. If at least one of these items is met, the user is asked whether to transfer. If the user chooses to transfer, the streaming media content is transferred from the first media playing device to the second media playing device. If the user chooses not to transfer, this user's behavior may be used for the next decision. Through this method, the playing device and content suitable for the user are determined, thus improving the user experience and realizing the intelligent transfer.

Based on the same concept, embodiments of the present invention also provide a streaming media playing device 100.

It can be understood that the streaming media playing device 100 provided in the embodiments of the present invention includes hardware structures and/or software modules that perform corresponding functions in order to achieve the above functions. In combination with modules and algorithm steps of examples described in the embodiments of the present invention, the embodiments of the present invention may be implemented in the form of hardware or a combination of hardware and computer software. Whether a certain function is executed by the hardware or the computer software driving the hardware depends on specific applications and design constraints of the technical solution. Those skilled in the art may adopt different methods for each specific application to implement the described functions, but such implementation should not be considered as beyond the scope of the technical solution in the embodiments of the present invention.

Fig. 6 shows a block diagram of a streaming media playing device 100 according to an illustrative embodiment. As illustrated in Fig. 6, the device includes a detection unit 101, and a processing unit 102.

The detection unit 101 is configured to detect a second media playing device meeting a first condition, in response to that a first media playing device is playing streaming media content.

The processing unit 102 is configured to transfer the streaming media content to the second media playing device for playing, in response to that the second media playing device meeting the first condition is detected.

In an embodiment, before the streaming media content is transferred to the second media playing device for playing, the processing unit 102 is further configured to determine that a second condition is met based on at least one of a device state, a spatial position relationship, or a historical behavior. The device state refers to a playing state of the second media playing device, the spatial position relationship refers to a spatial position relationship between the first media playing device and the second media playing device, and the historical behavior is configured to indicate a behavior of whether the user transfers the media file played by the first media playing device.

In an embodiment, the processing unit 102 determines that the second condition is met, in response to that at least one of the following is met: the current playing state of the second media playing device is the idle state; the first media playing device and the second media playing device are within the same spatial range; and there is the behavior of the user transferring the media file played by the first media playing device in the historical behavior.

In an embodiment, that the detection unit 101 meets the first condition includes at least one of: using the same account and/or the same network as the first media playing device for data transmission; supporting adopting a secure transmission protocol with a security level higher than a level threshold to perform data transmission; and not playing the media file.

In an embodiment, before transferring the streaming media content to the second media playing device for playing, the processing unit 102 is further configured to display prompt information and receive an instruction of the user confirming to transfer the streaming media content to the second media playing device for playing. The prompt information is configured to prompt the user whether to transfer the streaming media content to the second media playing device for playing.

In an embodiment, the processing unit 102 is further configured to save the historical behavior of the user deciding whether to transfer the streaming media content to the second media playing device for playing based on the prompt information.

With regards to the device in the above embodiments, the specific way in which each module performs the operation has been described in the embodiments of the method and will not be elaborated here.

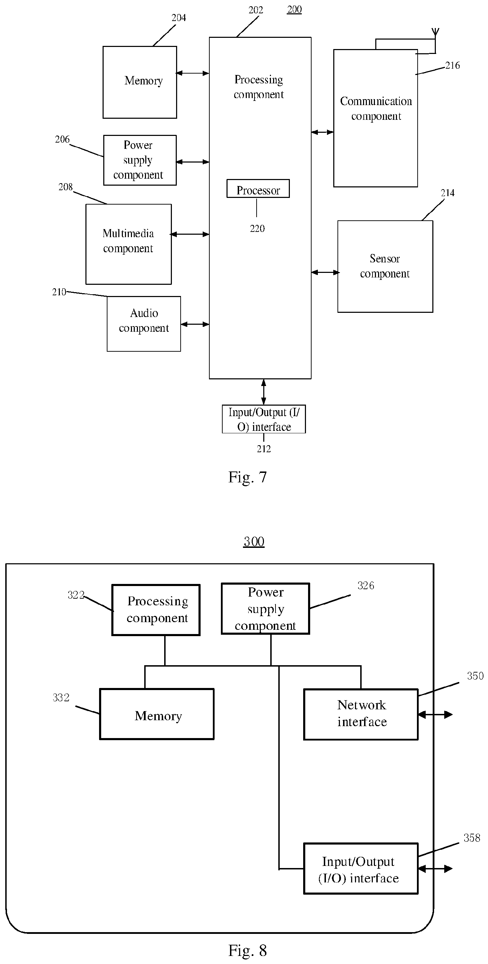

Fig. 7 shows a block diagram of a device 200 for streaming media playing according to an illustrative embodiment. The device 200 may be provided as a terminal. For example, the device 200 may be a mobile phone, a computer, a digital broadcasting terminal, a messaging device, a game console, a tablet device, a medical equipment, a fitness equipment, a personal digital assistant, etc.

As illustrated in Fig. 7, the device 200 may include one or more of the following components: a processing component 202, a memory 204, a power supply component 206, a multimedia component 208, an audio component 210, an input/output (I/O) interface 212, a sensor component 214, and a communication component 216.

The processing component 202 typically controls the overall operation of the device 200, such as the operations associated with display, telephone call, data communication, camera operations and recording operations. The processing component 202 may include one or more processors 220 to execute instructions to complete all or part of steps of the method described above. In addition, the processing component 202 may include one or more modules, to facilitate the interaction between the processing component 202 and other components. For example, the processing component 202 may include a multimedia module, to facilitate the interaction between the multimedia component 208 and the processing component 202.

The memory 204 is configured to store all types of data to support the operation of the device 200. Examples of these data include interactions of any applications or methods operated on the device 200, contact data, phonebook data, messages, pictures, videos, etc. The memory 204 can be implemented with any types of volatile or non-volatile memory device, or a combination thereof, such as static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or an optical disk.

The power supply component 206 may provide power supply for all components of the device 200. The power supply component 206 may include a power supply management system, one or more power supplies, and other components related to generating, managing and distributing power for the device 200.

The multimedia component 208 includes a screen providing an output interface between the device 200 and the user. In some embodiments, the screen may include a liquid crystal display (LCD) and a touch panel (TP). If the screen includes the touch panel, the screen can be implemented as a touch screen, to receive an input signal from the user. The touch panel includes one or more touch sensors to sense touch, sliding, and a gesture on the touch panel. The touch sensor can not only sense the boundary of a touch or sliding action, but also detect the duration and pressure associated with the touch or sliding action. In some embodiments, the multimedia component 208 includes a front camera and/or a rear camera. When the device 200 is in an operation mode, such as a shooting mode or a video mode, the front camera or the rear camera may receive external multimedia data. Each of the front camera and the rear camera can be a fixed optical lens system or have a focal length and an optical zoom capability.

The audio component 210 is configured to output and/or input an audio signal. For example, the audio component 210 includes a microphone (MIC), and the microphone is configured to receive an external audio signal when the device 200 is in an operating mode, such as a call mode, a record mode and a voice recognition mode. The received audio signal may be further stored in the memory 204 or be sent via the communication component 216. In some embodiments, the audio component 210 further includes a speaker for outputting the audio signal.

The I/O interface 212 provides an interface between the processing component 202 and a peripheral interface module, and the peripheral interface module may be a keyboard, a clicking wheel, a button or the like. These buttons may include but are not limited to: a home button, a volume button, a start button, and a lock button.

The sensor component 214 includes one or more sensors for providing condition assessments of various aspects for the device 200. For example, the sensor component 214 may detect the on/off state of the device 200 and the relative positioning of the component. For example, the component is a display and a keypad of the device 200. The sensor component 214 may further detect the location change of the device 200 or one component of the device 200, the presence or absence of contact between the user and the device 200, the orientation or acceleration/deceleration of the device 200, and the temperature change of the device 200. The sensor component 214 may include a proximity sensor, configured to detect the presence of nearby objects without any physical contact. The sensor component 214 may further include an optical sensor, such as CMOS or CCD image sensors, for use in imaging applications. In some embodiments, the sensor component 214 may further include an acceleration sensor, a gyroscope sensor, a magnetic sensor, a pressure sensor, or a temperature sensor.

The communication component 216 is configured to facilitate wired or wireless communication between the device 200 and other devices. The device 200 may access wireless networks based on communication standards, such as Wi-Fi^{™}, 2G or 3G, or their combination. In an illustrative embodiment, the communication component 216 receives broadcast signals or broadcast-related information from an external broadcast management system through a broadcast channel. In an illustrative embodiment, the communication component 216 also includes a near-field communication (NFC) module, to facilitate short-range communication. For example, the NFC module can be implemented based on the radio frequency identification (RFID) technology, infrared data association (IrDA) technology, ultra-wideband (UWB) technology, Bluetooth (BT) technology and other technologies.

In an illustrative embodiment, the device 200 may be implemented by one or more application-specific integrated circuits (ASIC), digital signal processors (DSP), digital signal processing devices (DSPD), programmable logic devices (PLD), field-programmable gate arrays (FPGA), controllers, microcontrollers, microprocessors, or other electronic components for performing the above method.

In an example embodiment, a non-transitory computer-readable storage medium including instructions is further provided, such as the memory 204 including instructions. The instructions may be executed by the processor 220 of the device 200 to complete the above method. For example, the non-temporary computer-readable storage medium may be a ROM, a random access memory (RAM), a CD-ROM, a magnetic tape, a floppy disk, an optical data storage device, etc.

Fig. 8 shows a block diagram of a device 300 for streaming media playing according to an illustrative embodiment. For example, the device 300 may be provided as a server. As illustrated in FIG. 8, the device 300 includes a processing component 322, which further includes one or more processors, and a memory resource represented by a memory 332, which is configured to store instructions executable by the processing component 322, for example, an application program. The application program stored in the memory 332 may include one or more modules each of which corresponds to a set of instructions. In addition, the processing component 322 is configured to execute the instructions, to perform the above method.

The device 300 may further include one power supply component 326 configured to execute power management of the device 300, and one wired or wireless network interface 350 configured to connect the device 300 to a network, and one input/output(I/O) interface 358. The device 300 may be operated on an operating system stored in the memory 332, for example, Windows ServerTM, Mac OS XTM, UnixTM, LinuxTM, FreeBSDTM or the like.

It may be understood that, "a plurality of" in the present invention means two or above, which is similar to other quantifiers. The phrase "and/or" describes the relationship of the associated objects, indicating that there may be three relationships. For example, A and/or B may represent three cases, namely only A alone, both A and B, and only B alone. The character "/" generally means the associated objects have a kind of "or" relationship. The singular forms "a", "the" and "said" are also intended to include plural forms, unless the context clearly indicates otherwise.

It should be understood that, the terms "first", "second", etc. are configured to describe various information, but the information shall not be limited to the terms. The terms are only used to distinguish the same category of information, rather than indicating a particular order or degree of importance. Actually, the terms "first", "second", etc. may be completely used interchangeably. For example, subject to the scope of the present invention, the first information may also be referred to as the second information, and similarly, the second information may also be referred to as the first information.

It should be further understood that the orientation or position relationship indicated by the terms "central", "longitudinal", "transverse", "front", "rear", "up", "down", "left", "right", "vertical", "horizontal", "top", "bottom", "inner", and "outer", and the like, is based on the orientation or position relationship shown in the accompanying drawings, which is only for the convenience of describing the embodiment and simplifying the description, and does not indicate or imply that the referred device or element must have a specific orientation and be constructed and operated in a specific orientation.

It should be further understood that, unless otherwise specified, the term "connection" includes direct connection without any other members between two, and also includes indirect connection with other elements between the two.

It may be further understood that, in the embodiments of the present invention, although operations are described in a particular order in the accompanying drawings, it should not be construed as requiring that the operations to be performed in a particular or serial order as shown, or that the operations shown to be performed in their entirety to obtain a desired result. In a certain environment, multitasking and parallel processing may be advantageous.

Other embodiments of the present invention will be apparent to those skilled in the art from consideration of the specification and practice of the invention disclosed here. The present invention is intended to cover any variations, uses, or adaptations of the solution. These variations, usages, or adaptive changes follow the general principles of the present invention and include common knowledge or conventional technical means in the related art not disclosed by the present invention.

It should be understood that the present invention is not limited to the precise structure as described above and shown in the accompanying drawings, but can have various modification and alternations without departing from the scope of the present invention. The scope of the present invention is only limited by the appended claims.

## Claims

1. A streaming media playing method, comprising:
detecting (S11) a second media playing device meeting a first condition, in response to that a first media playing device is playing streaming media content; and
transferring (S12) the streaming media content to the second media playing device for playing, in response to that the second media playing device meeting the first condition is detected.

2. The method according to claim 1, wherein before transferring (S12) the streaming media content to the second media playing device for playing, the method further comprises:
determining (S22) that a second condition is met based on at least one of a device state, a spatial position relationship and a historical behavior,
wherein the device state refers to a playing state of the second media playing device;
the spatial position relationship refers to a spatial position relationship between the first media playing device and the second media playing device; and
the historical behavior is configured to indicate a behavior of whether a user transfers a media file played by the first media playing device.

3. The method according to claim 2, wherein it is determined that the second condition is met (S32), in response to meeting at least one of:
a current playing state of the second media playing device being an idle state (S31a);
the first media playing device and the second media playing device being within a same spatial range (S31b); and
there being a behavior of the user transferring the media file played by the first media playing device in the historical behavior (S31c).

4. The method according to any one of claims 1 to 3, wherein meeting the first condition comprises at least one of:
using a same account and/or a same network as the first media playing device for data transmission;
supporting adopting a secure transmission protocol with a security level higher than a level threshold to perform data transmission; and
not playing a media file.

5. The method according to any one of claims 1 to 4, wherein before transferring (S12) the streaming media content to the second media playing device for playing, the method further comprises:
displaying (S41) prompt information and determining (S42) that an instruction of a user confirming to transfer the streaming media content to the second media playing device for playing is received,
wherein the prompt information is configured to prompt the user whether to transfer the streaming media content to the second media playing device for playing.

6. The method according to claim 5, further comprising:
saving a historical behavior of the user deciding whether to transfer the streaming media content to the second media playing device for playing based on the prompt information.

7. A streaming media playing device (100), comprising:
a detection unit (101) configured to detect a second media playing device meeting a first condition, in response to that a first media playing device is playing streaming media content; and
a processing unit (102) configured to transfer the streaming media content to the second media playing device for playing, in response to that the second media playing device meeting the first condition is detected.

8. The device (100) according to claim 7, wherein before transferring the streaming media content to the second media playing device for playing, the processing unit (102) is further configured to:
determine that a second condition is met based on at least one of a device state, a spatial position relationship and a historical behavior,
wherein the device state refers to a playing state of the second media playing device;
the spatial position relationship refers to a spatial position relationship between the first media playing device and the second media playing device; and
the historical behavior is configured to indicate a behavior of whether a user transfers a media file played by the first media playing device.

9. The device (100) according to claim 8, wherein the processing unit (102) determines that the second condition is met, in response to that at least one of the following is met:
a current playing state of the second media playing device being an idle state;
the first media playing device and the second media playing device being within a same spatial range; and
there being a behavior of the user transferring the media file played by the first media playing device in the historical behavior.

10. The device (100) according to any one of claims 7 to 9, wherein meeting the first condition comprises at least one of:
using a same account and/or a same network as the first media playing device for data transmission;
supporting adopting a secure transmission protocol with a security level higher than a level threshold to perform data transmission; and
not playing a media file.

11. The device (100) according to any one of claims 7 to 10, wherein the processing unit (102) is further configured to:
display prompt information and determine that an instruction of a user confirming to transfer the streaming media content to the second media playing device for playing is received, before the processing unit (102) transfers the streaming media content to the second media playing device for playing,
wherein the prompt information is configured to prompt the user whether to transfer the streaming media content to the second media playing device for playing.

12. The device (100) according to claim 11, wherein the processing unit (102) is further configured to:
save a historical behavior of the user deciding whether to transfer the streaming media content to the second media playing device for playing based on the prompt information.

13. A storage medium, wherein instructions are stored in the storage medium, and when the instructions in the storage medium are executed by a processor, the processor is allowed to execute a streaming media playing method according to any one of claims 1-6.
